# EUROPEAN PATENT APPLICATION

(11) **EP 2 099 206 A1**
(43) Date of publication of application: **09.09.2009**
(21) Application number: 07850125.1
(22) Date of filing: 05.12.2007
(51) Int. Cl.: H04M 3/42, G06F 13/00, H04M 1/2745, H04M 11/00

(54) **INFORMATION UPDATING SYSTEM AND INFORMATION UPDATING METHOD**

(30) Priority: 08.12.2006 JP 2006331960
(71) Applicant: NTT DoCoMo, Inc., Chiyoda-ku Tokyo 100-6150 (JP)
(72) Inventor: TAKEOKA, Masanori, Tokyo 100-6150 (JP); TANIGUCHI, Nobuchika, Tokyo 100-6150 (JP)
(74) Representative: Schwabe - Sandmair - Marx
(86) International application number: PCT/JP2007/073501
(87) International publication number: WO 2008/069240

(57) **Abstract**

Information updating system and information updating method for transmitting updated information of information about a mobile terminal apparatus and/or user to a receiving-side terminal apparatus to enable the information of a calling-side terminal apparatus to be automatically updated. A calling-side terminal apparatus 1A transmits updated information and address information of a mobile terminal apparatus to a receiving-side terminal apparatus 1B, and the receiving-side terminal apparatus 1B searches an address book for information of the calling-side terminal apparatus 1A based on the address information, and updates the searched information of the calling-side terminal apparatus 1A based on the updated information, or the calling-side terminal apparatus 1A transmits updated information of mobile terminal information to a server apparatus 31, the server apparatus 31 extracts receiving-side terminal apparatuses 1B having the address information of the calling-side terminal apparatus 1A from management information of mobile terminal apparatuses, and distributes the updated information to the extracted receiving-side terminal apparatuses 1B, and the receiving-side terminal apparatuses 1B update information of the calling-side terminal apparatus 1A based on the updated information.

## Description

### Technical Field

The present invention relates to an information updating system and information updating method for notifying updated information about a user of a mobile terminal apparatus.

### Background Art

Conventionally, a telephone book information changing apparatus has been disclosed in Patent Document 1 which enables work for changing a telephone number in a telephone book with the telephone number changed to be mutually executed, using backup data in a data center for backing up the telephone book information of cellular telephones.
[Patent Document 1] Japanese Laid-Open Patent Publication No. 2002-57798

### Disclosure of Invention

However, in the above-mentioned telephone book information changing apparatus, a person who has changed a telephone number needs to instruct the data center to change the telephone number, thus is forced to perform operation for giving instructions for the telephone number to be changed, and required to spend time and effort. Further, in the above-mentioned telephone book information changing apparatus, information to change is only the telephone number, and it is not supported to change an e-mail address or the like of the e-mail function installed in almost cellular telephones.

The present invention was carried out in view of the aforementioned respect, and it is an object of the invention to provide an information updating system and information updating method for transmitting updated information of information (model information, telephone number, e-mail address and the like) about a mobile terminal apparatus and/or user to a receiving-side terminal apparatus to enable the information of a calling-side terminal apparatus to be automatically updated.

An information updating system of the invention is provided with a calling-side terminal apparatus for transmitting updated information and address information of a mobile terminal apparatus, and a receiving-side terminal apparatus having search means for searching an address book for information of the calling-side terminal apparatus based on the address information, and updating means for updating the searched information of the calling-side terminal apparatus based on the updated information.

According to this configuration, it is possible to automatically update registered information of the address book of the communicating party individually. By this means, the user updating the registered information is capable of readily notifying the communicating party of the updated information, and it is possible on the communicating party side to update the registered information without conducting work for editing the address book.

An information updating system of the invention is provided with a calling-side terminal apparatus for transmitting updated information of mobile terminal information, a server apparatus having managing means for managing address information of mobile terminal apparatuses, extracting means for extracting transmission destinations having the address information of the calling-side terminal apparatus, and communication means for distributing the updated information transmitted from the calling-side terminal apparatus to the extracted transmission destinations, and a receiving-side terminal apparatus having updating means for updating information of the calling-side terminal apparatus based on the updated information.

According to this configuration, it is possible to automatically update the registered information of the address books of communicating parties by one operation. By this means, the user updating the registered information is capable of collectively notifying a plurality of communicating parties of the updated information, and each of the communicating party sides is capable of updating the registered information without conducting work for editing the address book.

The information updating system of the invention is preferably provided with a calling-side exchange having determining means for determining whether or not the receiving-side terminal apparatus is a registered user of a company of the exchange from the address information, and communication means for transmitting the updated information and the address information when the receiving-side terminal apparatus is a registered user of the company, and a receiving-side exchange having determining means for determining whether or not the receiving-side terminal apparatus supports the system from the address information, and communication means for transmitting the updated information and the address information to the receiving-side terminal apparatus when the receiving-side terminal apparatus supports the system.

In the information updating system of the invention, it is preferable to transmit information of a site where the updated information is stored to the receiving-side terminal apparatus when the receiving-side exchange determines that the receiving-side terminal apparatus does not support the system.

In the information updating system of the invention, it is preferable to transmit information of a site where the updated information is stored to the receiving-side terminal apparatus when the calling-side exchange determines that the receiving-side terminal apparatus is not a registered user of the company.

An information updating method of the invention is provided with a step of transmitting updated information and address information of a mobile terminal apparatus from a calling-side terminal apparatus to a receiving-side terminal apparatus, and in the receiving-side terminal apparatus, a step of searching an address book for information of the calling-side terminal apparatus based on the address information, and a step of updating the searched information of the calling-side terminal apparatus based on the updated information.

According to this method, it is possible to automatically update registered information of the address book of the communicating party individually. By this means, the user updating the registered information is capable of readily notifying the communicating party of the updated information, and it is possible on the communicating party side to update the registered information without conducting work for editing the address book.

An information updating method of the invention is provided with a step of transmitting updated information of mobile terminal information from a calling-side terminal apparatus to a server apparatus, in the server apparatus a step of extracting receiving-side terminal apparatuses having the address information of the calling-side terminal apparatus from management information of mobile terminal apparatuses, and a step of distributing the updated information to the extracted receiving-side terminal apparatuses, and in the receiving-side terminal apparatuses, a step of updating information of the calling-side terminal apparatus based on the updated information.

According to this method, it is possible to automatically update the registered information of the address books of communicating parties by one operation. By this means, the user updating the registered information is capable of collectively notifying a plurality of communicating parties of the updated information, and each of the communicating party sides is capable of updating the registered information without conducting work for editing the address book.

The information updating method of the invention is preferably provided with in a calling-side exchange a step of determining whether or not the receiving-side terminal apparatus is a registered user of a company of the exchange from the address information, and a step of transmitting the updated information and the address information when the receiving-side terminal apparatus is a registered user of the company, and in a receiving-side exchange a step of determining whether or not the receiving-side terminal apparatus supports the system from the address information, and a step of transmitting the updated information and the address information to the receiving-side terminal apparatus when the receiving-side terminal apparatus supports the system.

In the information updating method of the invention, it is preferable to transmit information of a site where the updated information is stored to the receiving-side terminal apparatus when the receiving-side exchange determines that the receiving-side terminal apparatus does not support the system.

In the information updating method of the invention, it is preferable to transmit information of a site where the updated information is stored to the receiving-side terminal apparatus when the calling-side exchange determines that the receiving-side terminal apparatus is not a registered user of the company.

According to the invention, since a calling-side terminal apparatus transmits updated information and address information of a mobile terminal apparatus to a receiving-side terminal apparatus, and the receiving-side terminal apparatus searches an address book for information of the calling-side terminal apparatus based on the address information, and updates the searched information of the calling-side terminal apparatus based on the updated information, or a calling-side terminal apparatus transmits updated information of mobile terminal information to a server apparatus, the server apparatus extracts receiving-side terminal apparatuses having the address information of the calling-side terminal apparatus from management information of mobile terminal apparatuses, and distributes the updated information to the extracted receiving-side terminal apparatuses, and the receiving-side terminal apparatuses update information of the calling-side terminal apparatus based on the updated information, it is possible to transmit updated information of information (model information, telephone number, e-mail address and the like) about a mobile terminal apparatus and/or user to the receiving-side terminal apparatus to enable information of the calling-side terminal apparatus to be automatically updated.

### Brief Description of Drawings

FIG. 1 is a diagram illustrating an information updating system according to Embodiment 1 of the invention;
FIG. 2 is a diagram illustrating a configuration of a terminal apparatus in the information updating system as shown in FIG. 1;
FIG. 3 is a diagram illustrating a configuration of a calling-side exchange in the information updating system as shown in FIG. 1;
FIG. 4 is a diagram illustrating a configuration of a receiving-side exchange in the information updating system as shown in FIG. 1;
FIG. 5 is a diagram illustrating a configuration of a server apparatus in the information updating system as shown in FIG. 1;
FIG. 6 is a diagram to explain registered information in an address book;
FIG. 7 is a sequence diagram to explain an information updating method according to Embodiment 1 of the invention;
FIGs. 8(a) to 8(C) are diagrams to explain key information for information update;
FIGs. 9(a) to 9(e) are screen display diagrams showing an update procedure in the information updating method according to Embodiment 1 of the invention;
FIG. 10 is another sequence diagram to explain the information updating method according to Embodiment 1 of the invention;
FIG. 11 is still another sequence diagram to explain the information updating method according to Embodiment 1 of the invention;
FIGs. 12(a) to 12(c) are screen display diagrams showing another update procedure in the information updating method according to Embodiment 1 of the invention;
FIG. 13 is a sequence diagram to explain authentication processing in the sequence as shown in FIG. 11; and
FIGs. 14(a) and 14(b) are sequence diagrams to explain an information updating method according to Embodiment 2 of the invention.

### Best Mode for Carrying Out the Invention

Embodiments of the invention will specifically be described below with reference to accompanying drawings.

### (Embodiment 1)

In this Embodiment, the case is described where updated information of a calling-side terminal apparatus is transmitted to a receiving-side terminal apparatus individually, and the receiving-side terminal apparatus updates the registered information of the calling-side terminal apparatus based on the updated information.

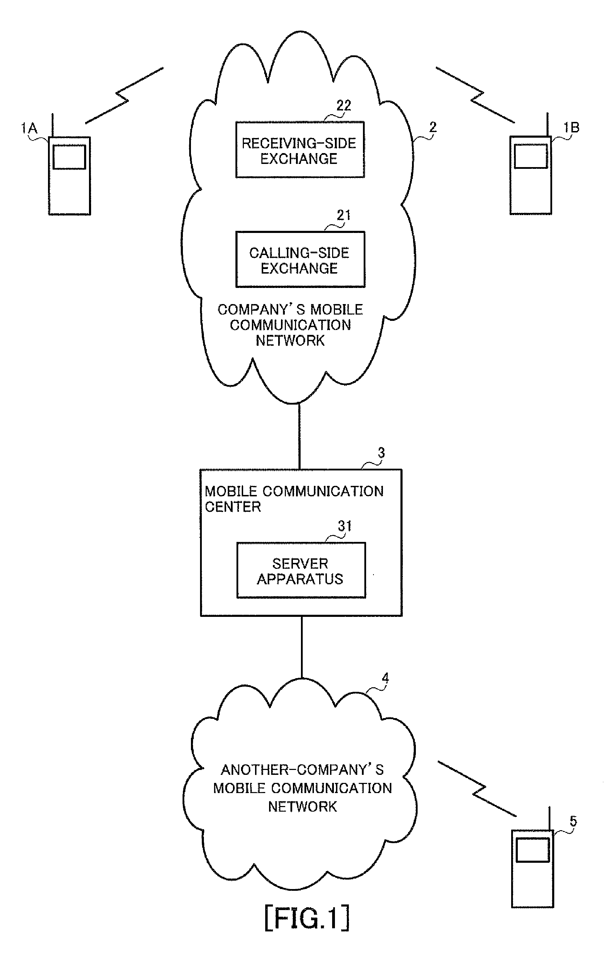

FIG. 1 is a diagram illustrating a configuration of an information updating system according to this Embodiment. As shown in FIG. 1, the information updating system is mainly comprised of a calling-side terminal apparatus 1A, a receiving-side terminal apparatus 1B connected via a mobile communication network 2 of a company of the apparatuses, a mobile communication center 3 connected to the terminal apparatuses 1A, 1B via the company's mobile communication network 2, and a terminal apparatus 5 of another company connected to the mobile communication center 3 via a communication network 4 of the another company. On the company's mobile communication network 2 are installed a calling-side exchange 21 and a receiving-side exchange 22. Further, the mobile communication canter 3 is installed with a server apparatus 31. In addition, to simplify descriptions, FIG. 1 shows the case of a single calling-side terminal apparatus 1A, a single receiving-side terminal apparatus 1B and a single another-company terminal apparatus 5, but the present invention is actually applicable to pluralities of calling-side terminal apparatuses, receiving-side terminal apparatuses and another-company terminal apparatuses.

Each of the terminal apparatuses 1A, 1B and 5 is a mobile terminal apparatus, and has an operating system (mobile apparatus OS), and on the mobile apparatus OS operate the browser function, viewer function and other functions. Further, the mobile communication network 2 is a network among the terminal apparatuses 1A, 1B that are the company's mobile terminals, and the mobile communication center 3, and the mobile communication network 4 is a network between the another company's mobile terminal 5 and the mobile communication center 3. The mobile communication network 2 includes a mobile packet communication network, in addition to the normal mobile communication network. Further, the mobile communication center 3 has, for example, an i-mode (registered trademark) server and the like, has the gateway function for connecting the mobile communication networks 2 and 4, and more specifically, has the information distribution function, e-mail transmission/reception function, e-mail storage function, contracted client management function, information provider management function and information fee billing function.

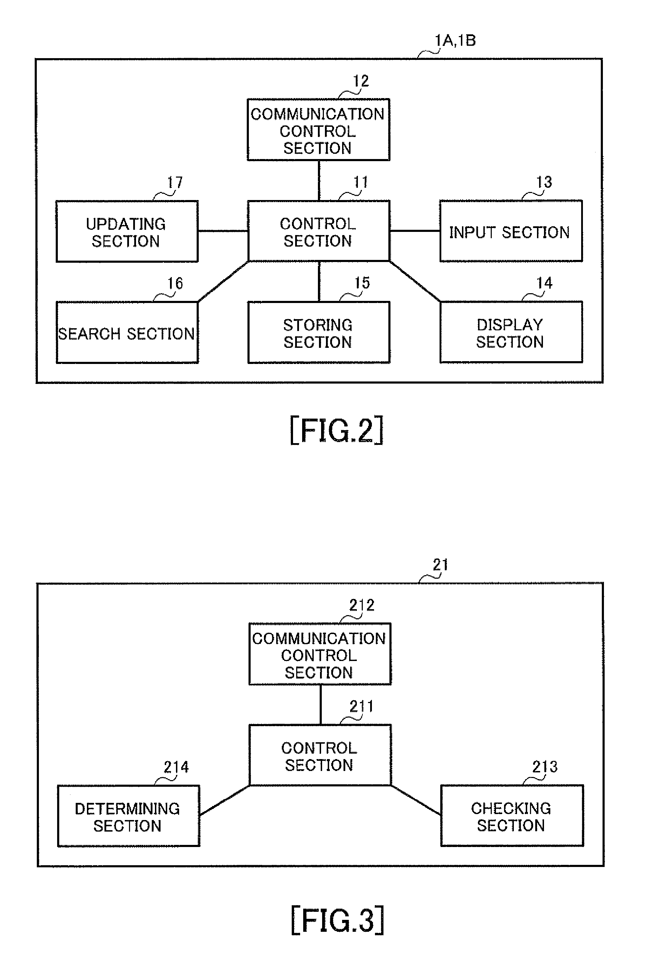

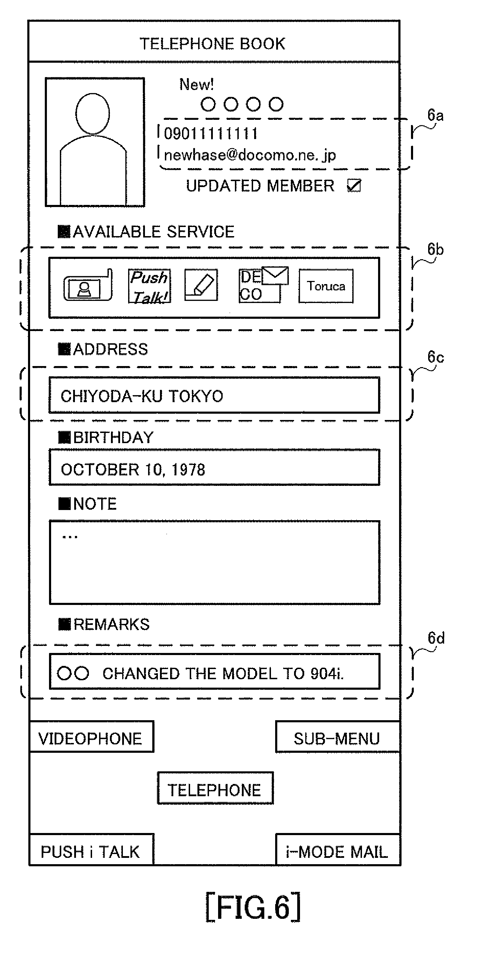

FIG. 2 is a diagram illustrating a configuration of each of the terminal apparatuses 1A, 1B in the information updating system as shown in FIG. 1. In addition, the terminal apparatuses 1A, 1B are assumed to have all the components provided in the normal mobile terminal apparatus. Each of the terminal apparatuses 1A, 1B is mainly comprised of a control section 11 that controls the entire apparatus, a communication control section 12 that communicates with terminal apparatuses and mobile communication center 3, an input section 13 to input various data, a display section 14 that displays various information, a storing section 15 that stores various data including an address book containing registered information as shown in FIG. 6, a search section 16 that searches the address book for registered information of a predetermined user, and an updating section 17 that updates the registered information of the user based on the updated information.

The communication control section 12 has the wireless communication function supporting the cellular telephone function, and performs wireless communication for calls and data communication with receiving-side another terminal apparatus 1B of a registered user of the company via the calling-side exchange 21 and the company's mobile communication network 2. Further, the communication control section 12 performs wireless communication with the calling-side exchange 21, the company's mobile communication network 2 and the mobile communication center 3 to transmit updated information.

As shown in FIG. 6, the address book stored in the storing section 15 contains at least a telephone number and e-mail address 6a of a communicating party, terminal function information 6b, personal information 6c such as an address and the like, field 6d for comments, etc.

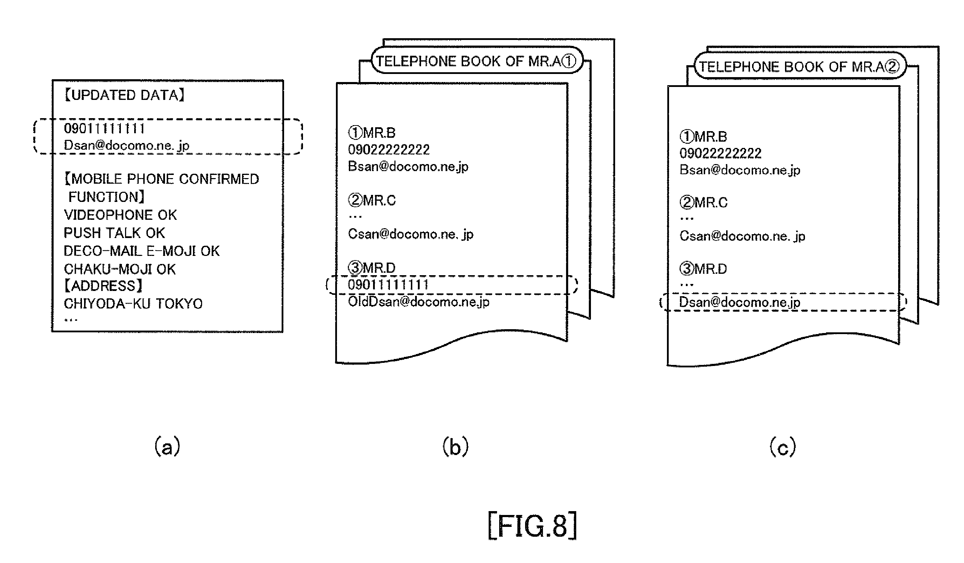

The search section 16 searches the address book stored in the storing section 15 for a user (information of the calling-side terminal apparatus) based on address information (for example, a telephone number or e-mail address) about the user included in the received updated information. In this case, when at least one of the telephone number and e-mail address is registered with the address book, it is possible to search for the user. In this case, when both of the telephone number and e-mail address are registered with the address book, the search is made preferentially based on the telephone number. For example, in the case that the updated information of D-san from the calling-side terminal apparatus is as shown in FIG. 8(a), when the telephone number and e-mail address are registered for D-san as shown in FIG. 8(b), the address book is searched using the telephone number as a key. Meanwhile, when the e-mail address is only registered for D-san, the address book is searched using the e-mail address as a key.

The updating section 17 changes the registered information in the address book stored in the storing section 15 by operation from the input section 13. In other words, the updating section 17 in the calling-side terminal apparatus 1A generates updated information based on a change of the registered information. Meanwhile, the updating section 17 of the receiving-side terminal apparatus 1B updates the registered information in the address book based on the received updated information.

FIG. 3 is a block diagram illustrating a configuration of the calling-side exchange in the information updating system as shown in FIG. 1. In addition, the calling-side exchange 21 is assumed to have all the components provided in the normal exchange. The calling-side exchange 21 is mainly comprised of a control section 211 that controls the entire apparatus, a communication control section 212 that communicates with the calling-side terminal apparatus 1A, receiving-side exchange 22 or server apparatus 31, a checking section 213 that acquires a telephone number associated with an e-mail address, and a determining section 214 that determines whether or not the receiving-side terminal apparatus 1B is a registered user of the company.

When the updated information is transmitted to an e-mail address of the receiving-side terminal apparatus 1B from the calling-side terminal apparatus 1A, the checking section 213 gains access to the server apparatus 31 of the mobile communication center 3 that manages e-mail addresses via the communication control section 212, and checks a telephone number associated with the e-mail address to acquire. The acquired telephone number is sent to the determining section 214.

The determining section 214 determines whether or not the receiving-side terminal apparatus 1B is a registered user of the company based on the address information of the receiving-side terminal apparatus 1B transmitted from the calling-side terminal apparatus 1A. The calling-side exchange 21 has information of telephone numbers of registered users of the company, checks the telephone number of the receiving-side terminal apparatus 1B against the information of telephone numbers of registered users of the company, and thereby determines whether or not the receiving-side terminal apparatus 1B is a registered user of the company. The determination result is sent to the control section 211. The control section 211 transmits the updated information from the calling-side terminal apparatus 1A to the receiving-side exchange 22 when the determination result indicates the registered user of the company, while transmitting the updated information from the calling-side terminal apparatus 1A to the server apparatus 31 when the determination result does not indicate the registered user of the company.

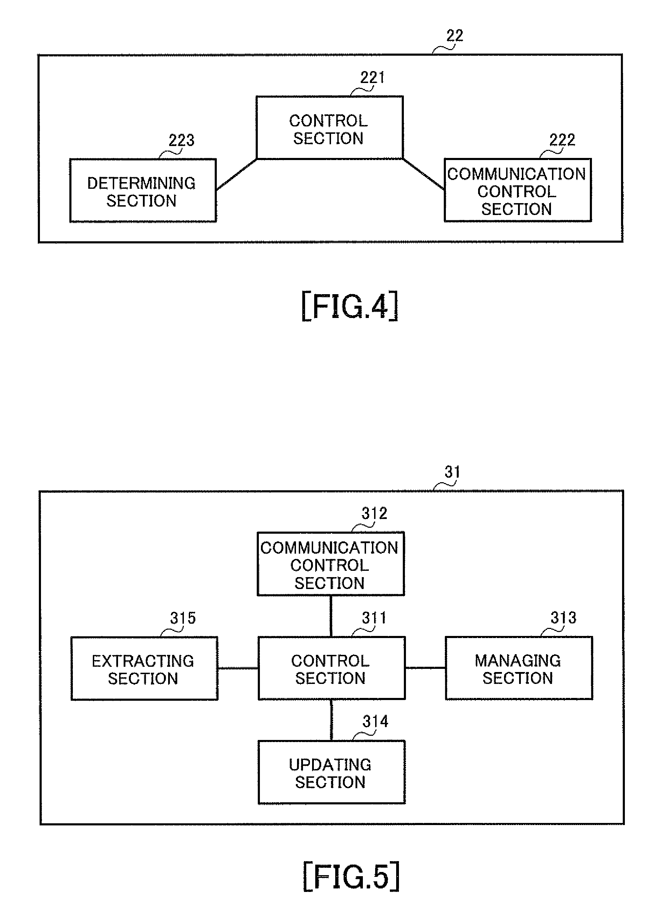

FIG. 4 is a diagram illustrating a configuration of the receiving-side exchange in the information updating system as shown in FIG. 1. In addition, the receiving-side exchange 22 is assumed to have all the components provided in the normal exchange. The receiving-side exchange 22 is mainly comprised of a control section 221 that controls the entire apparatus, a communication control section 222 that communicates with the receiving-side terminal apparatus 1B, calling-side exchange 22 or server apparatus 31, and a determining section 223 that determines whether or not the receiving-side terminal apparatus 1B supports this system.

The determining section 223 determines whether or not the receiving-side terminal apparatus 1B is capable of supporting the system based on the address information of the receiving-side terminal apparatus 1B transmitted from the calling-side terminal apparatus 1A. The receiving-side exchange 22 has information of telephone numbers of terminal apparatuses capable of supporting the system, checks the telephone number of the receiving-side terminal apparatus 1B against the information of telephone numbers of terminal apparatuses capable of supporting the system, and thereby determines whether or not the receiving-side terminal apparatus 1B is capable of supporting the system. The determination result is sent to the control section 221. The control section 221 transmits the updated information from the calling-side terminal apparatus 1A to the receiving-side terminal apparatus 1B when the determination result indicates that the apparatus 1B supports the system, while transmitting the updated information from the calling-side terminal apparatus 1A to the server apparatus 31 when the determination result indicates that the apparatus 1B does not support the system.

FIG. 5 is a diagram illustrating a configuration of the server apparatus in the information updating system as shown in FIG. 1. In addition, the server apparatus 31 is assumed to have all the components provided in the normal server apparatus. The server apparatus 31 is mainly comprised of a control section 311 that controls the entire apparatus, a communication control section 312 that communicates with the calling-side terminal apparatus 1A, receiving-side terminal apparatus 1B, calling-side exchange 21 or receiving-side exchange 22, a managing section 313 that manages address information of mobile terminal apparatuses, an updating section 314 that updates the registered information of the address book based on the updated information or generates an update site based on the updated information, and an extracting section 315 that extracts transmission destinations having the address information of the calling-side terminal apparatus.

The managing section 313 manages the address information of mobile terminal apparatuses. For example, when the apparatus 31 is entrusted with address books of the users, the section 313 manages the address books.

Based on the updated information from the calling-side terminal apparatus 1A, the updating section 314 updates the registered information of the address book managed in the managing section 313. Meanwhile, the updating section 314 generates an update site based on the updated information from the calling-side terminal apparatus 1A.

The extracting section 315 extracts transmission destinations having the address information of the calling-side terminal apparatus. The extracting section 315 extracts receiving-side terminal apparatuses 1B to transmit the updated information from the calling-side terminal apparatus 1A from the address books managed in the managing section 313. More specifically, the section 315 extracts address books containing the address information of the calling-side terminal apparatus from the address books managed in the managing section 313, and specifies terminal apparatuses of users of the extracted address books. In other words, the section 315 specifies address information of the terminal apparatuses to transmit the updated information as the transmission destinations.

Described next is an information updating method according to Embodiment 1 of the invention.
In the information updating system of this Embodiment, in transmission after updating the address information such as the telephone number, e-mail address and the like, when the calling-side terminal apparatus 1A transmits updated information generated from the updated address information to the calling-side exchange 21 in addition to the transmission information, the updated information is transmitted to the receiving-side terminal apparatus 1B via the calling-side exchange 21 and receiving-side exchange 22.

In other words, in the information updating method of the invention, the updated information and the address information of the mobile terminal apparatus is transmitted from the calling-side terminal apparatus to the receiving-side terminal apparatus, and the receiving-side terminal apparatus searches the address book for the information of the calling-side terminal apparatus based on the address information, and updates the searched information of the calling-side terminal apparatus based on the updated information.

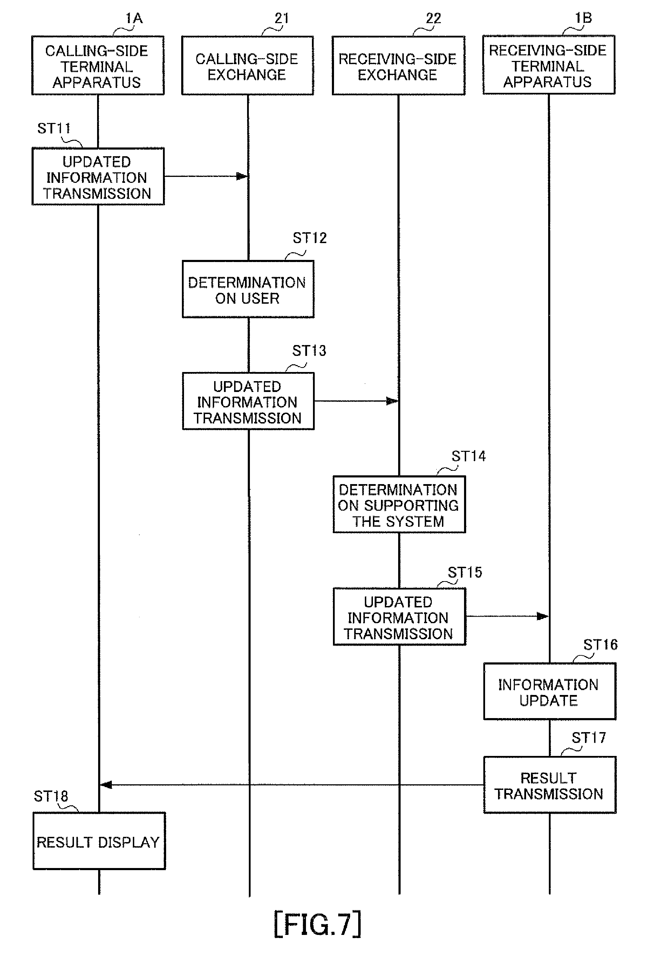

FIG. 7 is a sequence diagram to explain the information updating method according to Embodiment 1 of the invention. This sequence is in the case where a user of the receiving-side terminal apparatus is a registered user of the company, and the receiving-side terminal apparatus is capable of supporting this system. Described herein is the case where the calling-side terminal apparatus 1A first updates the address information, and then, calls the receiving-side terminal apparatus 1B. In addition, the invention is not limited to this aspect, and the calling-side terminal apparatus 1A may transmit the updated information to the receiving-side terminal apparatus 1B separately from a call.

When the calling-side terminal apparatus 1A transmits the updated information obtained by updating the address information, the updated information is transmitted to the calling-side exchange 21 (ST11). In the calling-side exchange 21, the determining section 214 determines whether or not the receiving-side terminal apparatus 1B is a registered user of the company from the address information of the receiving-side terminal apparatus 1B (ST12). Then, when the receiving-side terminal apparatus 1B is a registered user of the company, the updated information is transmitted to the receiving-side exchange 22 (ST13). In addition, in the case that the calling-side terminal apparatus 1A transmits the updated information, when the updated information is transmitted to the e-mail address of the receiving-side terminal apparatus 1B, in the calling-side exchange 21, the checking section 213 gains access to the server apparatus 31 of the mobile communication center 3 to acquire a telephone number corresponding to the e-mail address, and the updated information is transmitted to the receiving-side exchange 22 with the telephone number.

In the receiving-side exchange 22, the determining section 223 determines whether or not the receiving-side terminal apparatus 1B is capable of supporting this system from the address information of the receiving-side terminal apparatus 1B (ST14). Then, when the receiving-side terminal apparatus 1B is capable of supporting the system, the exchange 22 transmits the updated information to the receiving-side terminal apparatus 1B (ST15). Next, in the receiving-side terminal apparatus 1B, the search section 16 searches the address book based on the address information of the calling-side terminal apparatus 1A, and the searched registered information is updated based on the updated information (ST16). Then, the receiving-side terminal apparatus 1B transmits a result indicating that update was made to the calling-side terminal apparatus 1A (ST17), and in the calling-side terminal apparatus 1A, the display section 14 displays the update result transmitted from the receiving-side terminal apparatus 1B (ST18). By this means, the user of the calling-side terminal apparatus 1A is capable of confirming completion of update of the registered information in the address book of the communicating party.

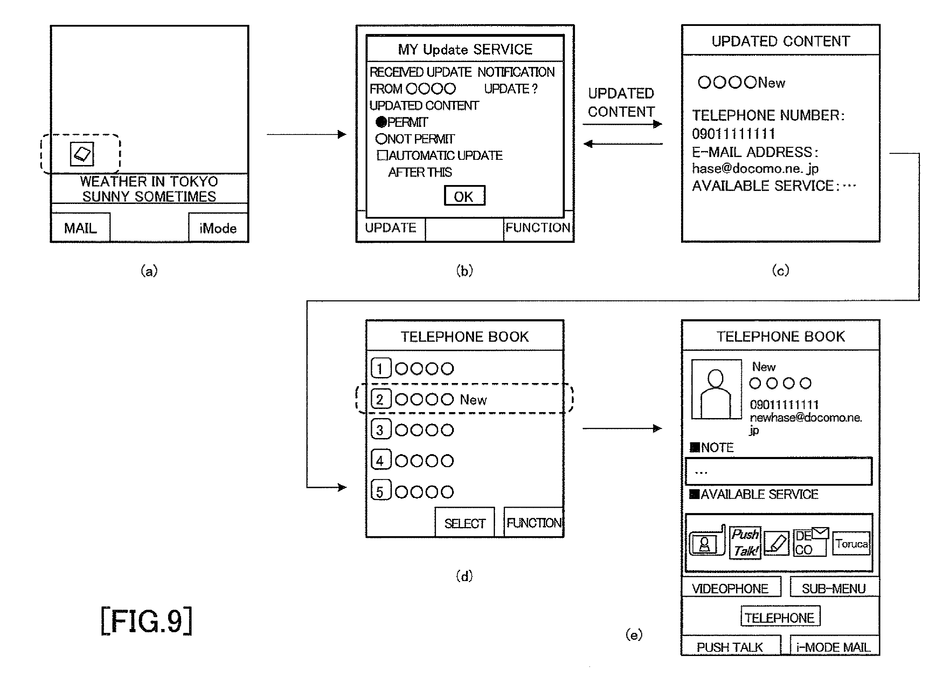

When the receiving-side terminal apparatus 1B receives the updated information, for example, as shown in FIG. 9(a), the display section 14 displays an update mark. When the user clicks the update mark, a screen as shown in FIG. 9(b) is displayed to require a reply to permission of update. At this point, as shown in FIG. 9(c), the user is capable of checking the update content. Then, when the user permits update, as shown in FIG. 9(d) or 9(e), the registered information of the address book is updated based on the updated information, and display of "new" indicating the information being updated is also displayed. In addition, the display examples and procedure as shown in FIG. 9 are examples, and capable of being modified as appropriate.

Thus, when the user of the receiving-side terminal apparatus is a registered user of the company and the receiving-side terminal apparatus is capable of supporting the system, it is possible to automatically update the registered information in the address book of the communicating party individually. By this means, the user updating the registered information is capable of readily notifying the communicating party of the updated information, and it is possible on the communicating party side to update the registered information without conducting work for editing the address book.

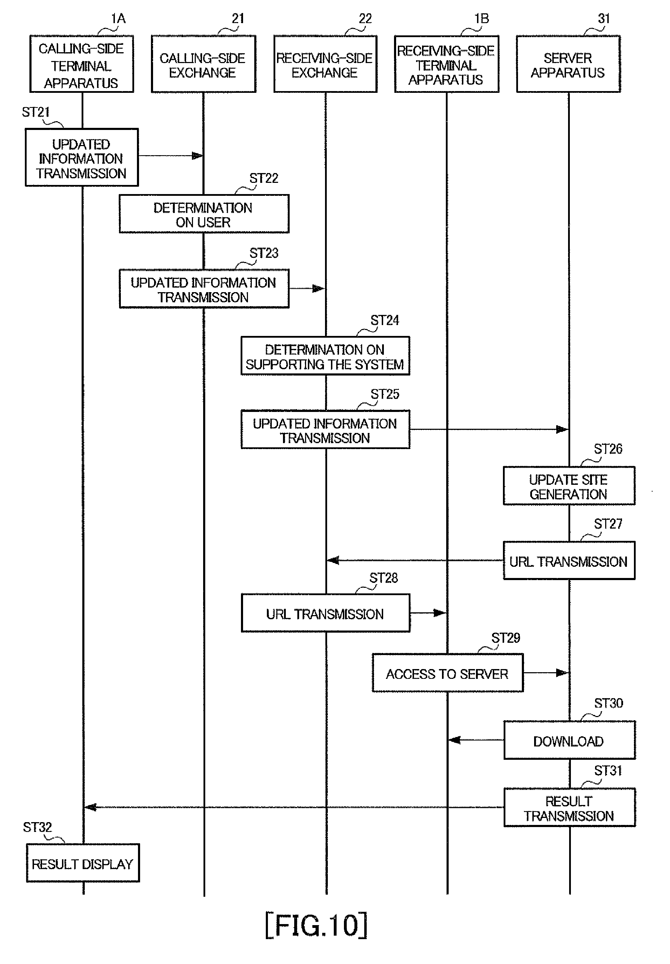

FIG. 10 is another sequence diagram to explain the information updating method according to Embodiment 1 of the invention. This sequence is in the case where a user of the receiving-side terminal apparatus is a registered user of the company, and the receiving-side terminal apparatus is not capable of supporting this system. Described herein is the case where the calling-side terminal apparatus 1A first updates the address information, and then, calls the receiving-side terminal apparatus 1B. In addition, the invention is not limited to this aspect, and the calling-side terminal apparatus 1A may transmit the updated information to the receiving-side terminal apparatus 1B separately from a call.

When the calling-side terminal apparatus 1A transmits the updated information obtained by updating the address information, the updated information is transmitted to the calling-side exchange 21 (ST21). In the calling-side exchange 21, the determining section 214 determines whether or not the receiving-side terminal apparatus 1B is a registered user of the company from the address information of the receiving-side terminal apparatus 1B (ST22). Then, when the receiving-side terminal apparatus 1B is a registered user of the company, the updated information is transmitted to the receiving-side exchange 22 (ST23). In addition, in the case that the calling-side terminal apparatus 1A transmits the updated information, when the updated information is transmitted to the e-mail address of the receiving-side terminal apparatus 1B, in the calling-side exchange 21, the checking section 213 gains access to the server apparatus 31 of the mobile communication center 3 to acquire a telephone number corresponding to the e-mail address, and the updated information is transmitted to the receiving-side exchange 22 with the telephone number.

In the receiving-side exchange 22, the determining section 223 determines whether or not the receiving-side terminal apparatus 1B is capable of supporting this system from the address information of the receiving-side terminal apparatus 1B (ST24). Then, when the receiving-side terminal apparatus 1B is not capable of supporting the system, the exchange 22 transmits the updated information to the server apparatus 31 of the mobile communication center 3 (ST25).

In the server apparatus 31, the updating section 314 generates an update site including the updated information from the receiving-side exchange 22 (ST26). Then, the communication control section 312 transmits an address (URL) of a storage location of the generated update site to the receiving-side exchange 22 (ST27). In addition, the update site to generate is not limited particularly in the structure or the like, as long as the updated information is included in the site.

Next, in the receiving-side exchange 22, the communication control section 221 transmits the URL of the update site to the telephone number of the receiving-side terminal apparatus 1B by SMS (Short Message Service) (ST28). In the receiving-side terminal apparatus 1B, the communication control section 12 gains access to the URL of the update site (ST29), and displays the update site in the display section 14 of the receiving-side terminal apparatus 1B. By this means, the user of the receiving-side terminal apparatus 1B is capable of recognizing update of the registered information in the calling-side terminal apparatus 1A by the update site. Further, when necessary, the user downloads the updated information or registered information including the updated information from the server apparatus 31 (ST30). By this means, it is possible to reflect update of the registered information in the calling-side terminal apparatus 1A in the receiving-side terminal apparatus 1B. In this case, the search section 16 searches the address book based on the address information of the calling-side terminal apparatus 1A, and the searched registered information is updated based on the updated information.

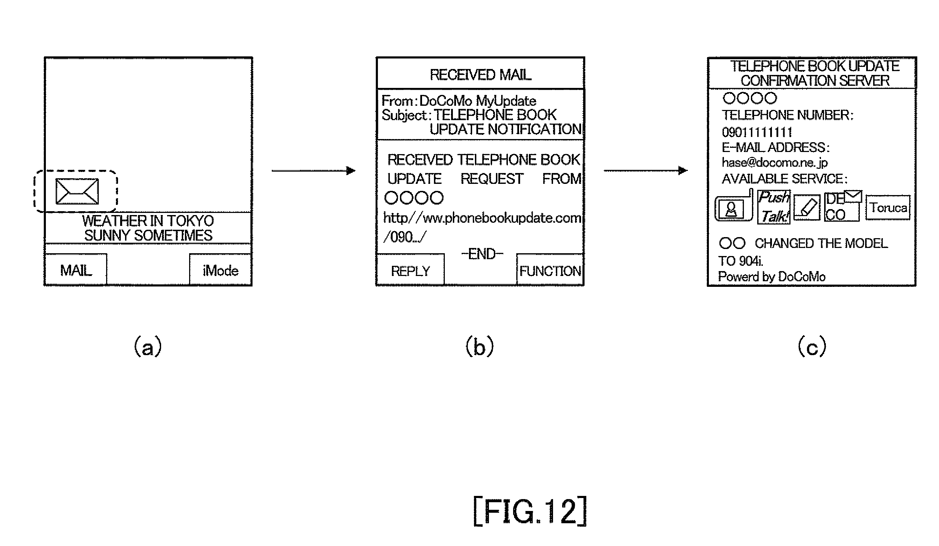

When the receiving-side terminal apparatus 1B receives the SMS, for example, as shown in FIG. 12(a), the display section 14 displays an SMS mark. When the user clicks the SMS mark, the URL of the update site is displayed on the screen as shown in FIG. 12(b). Then, when the user clicks the URL of the update site, the user is capable of viewing the updated information of the registered information of the address book as shown in FIG. 12(c). In addition, the display examples and procedure as shown in FIG. 12 are examples, and capable of being modified as appropriate.

Then, the server apparatus 31 transmits a result indicating the updated information being checked to the calling-side terminal apparatus 1A (ST31), and the calling-side terminal apparatus 1A displays the check result transmitted from the server apparatus 31 in the display section 14 (ST32). By this means, the user of the calling-side terminal apparatus 1A is capable of recognizing that the communicating party checked update of the registered information of the address book.

Thus, even when the user of the receiving-side terminal apparatus is a registered user of the company but the receiving-side terminal apparatus is not capable of supporting the system, it is also possible to notify the communication party of update of the registered information of the address book individually.

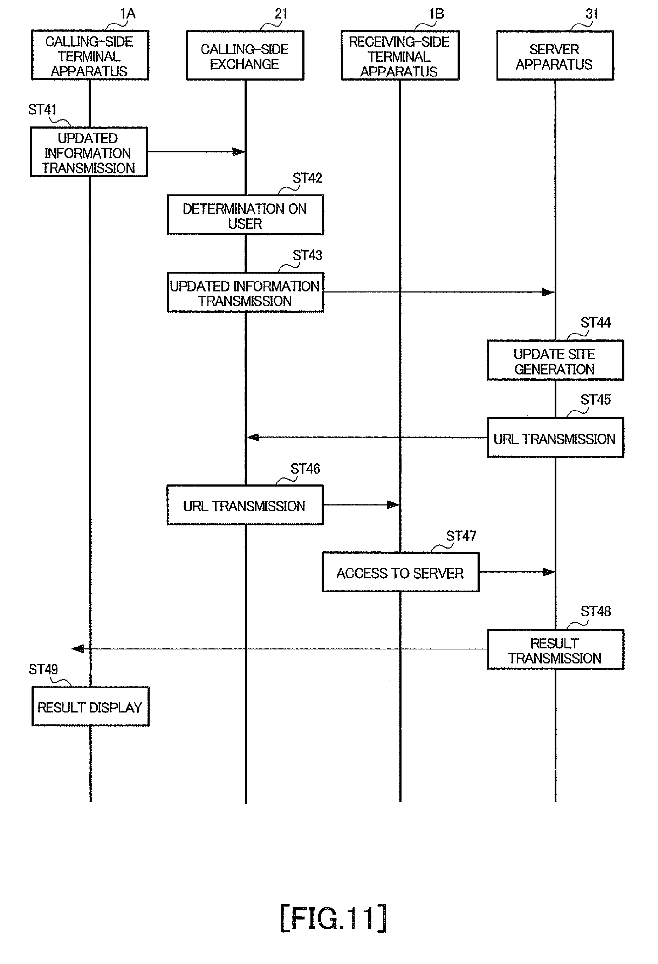

FIG. 11 is still another sequence diagram to explain the information updating method according to Embodiment 1 of the invention. This sequence diagram is in the case that a user of the receiving-side terminal apparatus is not a registered user of the company. Described herein is the case where the calling-side terminal apparatus 1A first updates the address information, and then, calls the receiving-side terminal apparatus 5. In addition, the invention is not limited to this aspect, and the calling-side terminal apparatus 1A may transmit the updated information to the receiving-side terminal apparatus 5 separately from a call.

When the calling-side terminal apparatus 1A transmits the updated information obtained by updating the address information, the updated information is transmitted to the calling-side exchange 21 (ST41). In the calling-side exchange 21, the determining section 214 determines whether or not the receiving-side terminal apparatus 5 is a registered user of the company from the address information of the receiving-side terminal apparatus 5 (ST42). Then, when the receiving-side terminal apparatus 5 is not a registered user of the company, the updated information is transmitted to the server apparatus 31 of the mobile communication center 3 (ST43).

In the server apparatus 31, the updating section 314 generates an update site including the updated information from the calling-side exchange 21 (ST44). Then, the communication control section 312 transmits an address (URL) of a storage location of the generated update site to the calling-side exchange 21 (ST45). In addition, the update site to generate is not limited particularly in the structure or the like, as long as the updated information is included in the site.

Next, in the calling-side exchange 21, the communication control section 221 transmits the URL of the update site to the telephone number of the receiving-side terminal apparatus 5 by e-mail via the mobile communication center 3 and another-company mobile communication network 4 (ST46). Next, the receiving-side terminal apparatus 5 gains access to the URL of the update site (ST47) to display the update site. By this means, the user of the receiving-side terminal apparatus 5 is capable of recognizing update of the registered information in the calling-side terminal apparatus 1A by the update site.

When the receiving-side terminal apparatus 5 receives the e-mail, for example, as shown in FIG. 12(a), an SMS mark is displayed on the display screen. When the user clicks the SMS mark, the URL of the update site is displayed on the screen as shown in FIG. 12(b). Then, when the user clicks the URL of the update site, the user is capable of viewing the updated information of the registered information of the address book as shown in FIG. 12(c). In addition, the display examples and procedure as shown in FIG. 12 are examples, and capable of being modified as appropriate.

Then, the server apparatus 31 transmits a result indicating the updated information being checked to the calling-side terminal apparatus 1A (ST48), and the calling-side terminal apparatus 1A displays the check result transmitted from the server apparatus 31 in the display section 14 (ST49). By this means, the user of the calling-side terminal apparatus 1A is capable of recognizing that the communicating party checked update of the registered information of the address book.

Thus, even when the user of the receiving-side terminal apparatus is not a registered user of the company, it is also possible to notify the communication party of update of the registered information of the address book individually. In addition, in first access to the update site of the server apparatus 31, authentication may be performed to verify the access from the receiving-side terminal apparatus 5 that is the communicating party of the calling-side terminal apparatus 1A.

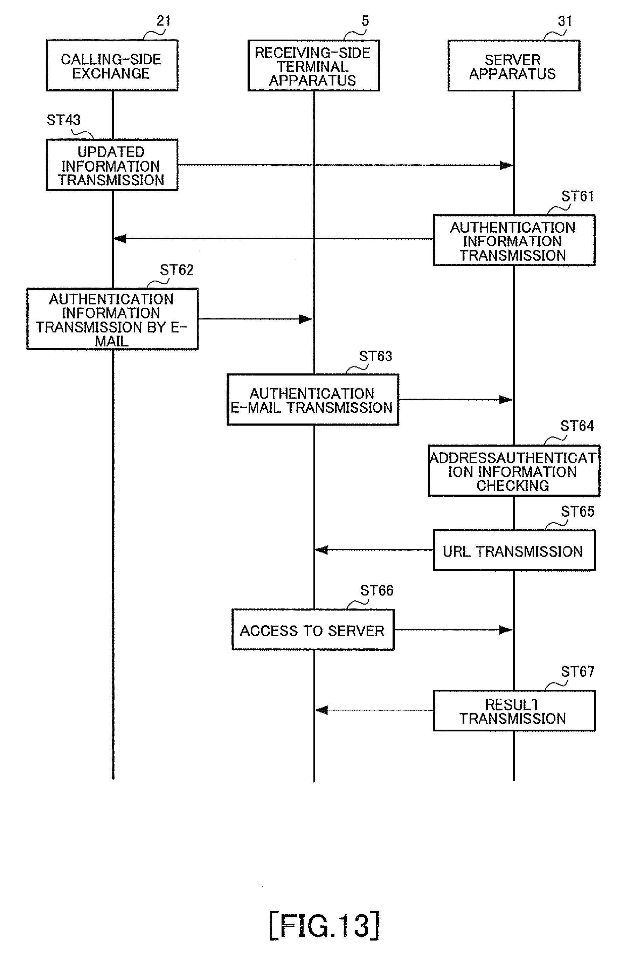

When authentication processing is performed, for example, the processing is executed in the procedure as shown in FIG. 13. When the calling-side exchange 21 transmits the updated information to the server apparatus 31, the exchange 21 also transmits the address information of the receiving-side terminal apparatus 5 (ST43). When the server apparatus 31 receives the updated information and address information, the apparatus 31 transmits authentication information (for example, authentication code) to the calling-side exchange 21 (ST61). At this point, the server apparatus 31 holds the address information (e-mail address) and authentication information of the receiving-side terminal apparatus 5. When the calling-side exchange 21 receives the authentication information, the exchange 21 transmits the authentication information to the e-mail address of the receiving-side terminal apparatus 5 by e-mail (ST62). Then, when the receiving-side terminal apparatus 5 receives the e-mail, the apparatus 5 transmits an e-mail (authentication e-mail) including the authentication information to the server apparatus 31 (ST63).

The server apparatus 31 compares the held e-mail address and authentication information with the e-mail address of the sender of the authentication e-mail and the authentication information, and authenticates the user of the receiving-side terminal apparatus 5 (ST64). When the user is authenticated, the URL of the update site is transmitted to the receiving-side terminal apparatus 5 by e-mail (ST65). Then, the receiving-side terminal apparatus 5 gains access to the URL of the update site (ST66) to display the update site. At this point, the server apparatus 31 acquires specific information such as a user ID, telephone number or the like, and another specific information (identification information) such as a client certificate or the like on the receiving-side terminal apparatus 5. By this means, the user of the receiving-side terminal apparatus 5 is capable of checking update of the registered information in the calling-side terminal apparatus 1A using the update site. Then, the server apparatus 31 transmits a result indicating the updated information being checked to the receiving-side terminal apparatus 5 (ST67). With respect to subsequent accesses to the server apparatus 31 from the receiving-side terminal apparatus 5, the server apparatus 31 is able to perform authentication using the acquired identification information, and the need of the above-mentioned authentication processing is eliminated.

### (Embodiment 2)

In this Embodiment, the case is described where updated information of the calling-side terminal apparatus is collectively distributed to receiving-side terminal apparatuses, and the receiving-side terminal apparatus updates registered information of the calling-side terminal apparatus based on the updated information.

In the information updating method of the invention, the calling-side terminal apparatus transmits the updated information of mobile terminal information to the server apparatus, the server apparatus extracts receiving-side terminal apparatuses having the address information of the calling-side terminal apparatus from management information of mobile terminal apparatuses, and distributes the updated information to the extracted receiving-side terminal apparatuses, and the receiving-side terminal apparatuses update the information of the calling-side terminal apparatus based on the updated information.

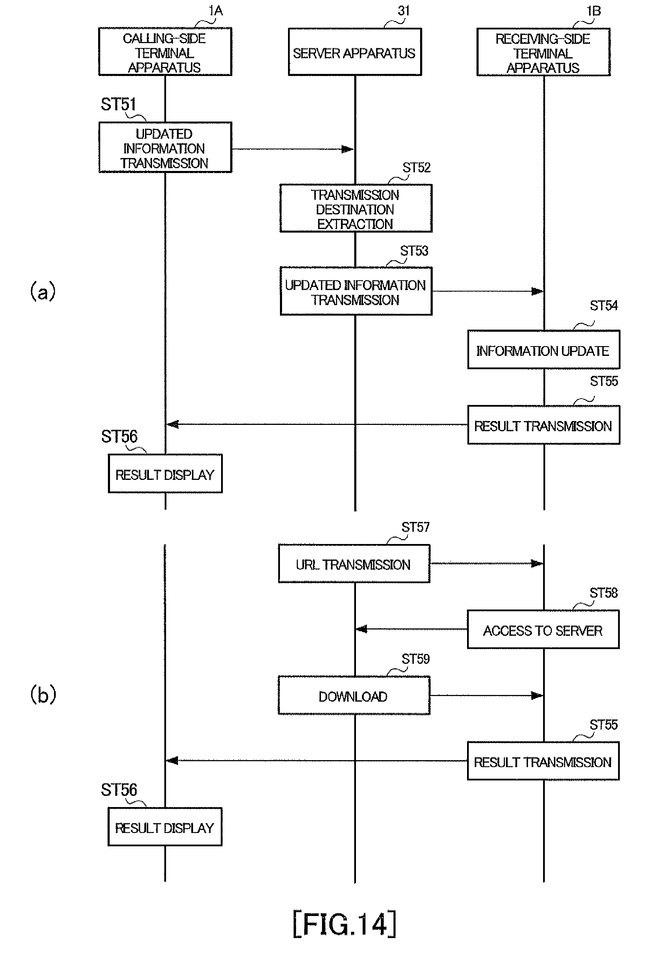

F1G. 14 is a sequence diagram to explain an information updating method according to Embodiment 2 of the invention. The sequence as shown in FIG. 14(a) is in the case where users of the receiving-side terminal apparatuses are registered users of the company, and the receiving-side terminal apparatuses are capable of supporting this system. The condition is assumed herein that the server apparatus 31 manages address books of mobile terminal apparatuses.

When the calling-side terminal apparatus 1A transmits the updated information obtained by updating the address information, the updated information is transmitted to the server apparatus 31 of the mobile communication center 3 (ST51). In the server apparatus 31, the extracting section 315 extracts address books including the registered information (address information) of the calling-side terminal apparatus 1A from among the address books managed in the managing section 313 (ST52). Then, the apparatus 31 distributes the updated information of the calling-side terminal apparatus 1A collectively to telephone numbers of users of the extracted address books (ST53). In other words, the apparatus 31 broadcasts the updated information simultaneously to terminal apparatuses (receiving-side terminal apparatuses 1B) of owners of the address books including the registered information of the user of the calling-side terminal apparatus 1A.

Next, in the receiving-side terminal apparatus 1B, the search section 16 searches the address book based on the address information of the calling-side terminal apparatus 1A, and the searched registered information is updated based on the updated information (ST54). Then, the receiving-side terminal apparatus 1B transmits a result indicating update being made to the calling-side terminal apparatus 1A (ST55), and in the calling-side terminal apparatus 1A, the display section 14 displays the update result transmitted from the receiving-side terminal apparatus 1B (ST56). By this means, the user of the calling-side terminal apparatus 1A is capable of confirming completion of update of the registered information in the address book of the communicating party.

Thus, when the users of the receiving-side terminal apparatuses are registered users of the company and the receiving-side terminal apparatuses are capable of supporting the system, it is possible to automatically update the registered information in the address books of the communicating parties by one operation. By this means, the user updating the registered information is capable of collectively notifying a plurality of communicating parties of the updated information, and it is possible on each communicating party side to update the registered information without conducting work for editing the address book.

Also in this Embodiment, as in Embodiment 1, cases are considered that the receiving-side terminal apparatus 1B is not capable of supporting the system, and that the receiving-side terminal apparatus 5 is not a registered user of the company. In such cases, as in Embodiment 1, the calling-side exchange 21 and receiving-side exchange 22 make determinations, i.e. the calling-side exchange 21 determines whether or not the user is a registered user of the company, while the receiving-side exchange 22 determines whether or not the apparatus is capable of supporting the system, and the apparatus gains access to the update site generated in the server apparatus 31.

In this case, as shown in FIG. 14(b), when the server apparatus 31 receives the updated information, the apparatus 31 generates an update site including the updated information, and transmits an address (URL) of a storage location of the generated update site to the receiving-side terminal apparatuses 1B, 5 (ST57). The receiving-side terminal apparatuses 1B, 5 gain access to the URL of the update site (ST58), and display the update site. By this means, the users of the receiving-side terminal apparatuses 1B, 5 are capable of recognizing update of the registered information in the calling-side terminal apparatus 1A by the update site. Further, when the user of the receiving-side terminal apparatus 1B is a registered user of the company, as needed, the user downloads the updated information or registered information including the updated information from the server apparatus 31 (ST59). By this means, it is possible to reflect update of the registered information in the calling-side terminal apparatus 1A in the receiving-side terminal apparatus 1B. In this case, the search section 16 searches the address book based on the address information of the calling-side terminal apparatus 1A, and the searched registered information is updated based on the updated information.

Then, the receiving-side terminal apparatuses 1B, 5 transmit a result indicating the updated information being checked to the calling-side terminal apparatus 1A (ST55), and the calling-side terminal apparatus 1A displays the check result (ST56). By this means, the user of the calling-side terminal apparatus 1A is capable of recognizing that the communicating party checked update of the registered information of the address book.

Thus, even in the case where the user of the receiving-side terminal apparatus is not a registered user of the company or the receiving-side terminal apparatus is not capable of supporting the system, it is possible to automatically notify the registered information of the address book of the communicating party by one operation. By this means, the user updating the registered information is capable of collectively notifying a plurality of communicating parties of the updated information.

The present invention is not limited to above-mentioned Embodiments 1 and 2, and is capable of being carried into practice with various modifications thereof. For example, it is described in above-mentioned Embodiments 1 and 2 that the server apparatus for generating the update site of the updated information is the same as the server apparatus entrusted with address books, but the invention is not limited thereto, and the server apparatus for generating the update site of the updated information and the server apparatus entrusted with address books may be provided separately from each other. Further, without departing from the scope of the invention, the processing sections and processing procedures are capable of being carried into practice with various modifications thereof as appropriate. Moreover, the invention is capable of being modified as appropriate to be carried into practice without departing from the scope of the invention.

### Industrial Applicability

As described above, the information updating system and information updating method according to the invention are to transmit updated information of information (model information, telephone number, e-mail address and the like) about a mobile terminal apparatus and/or user to a receiving-side terminal apparatus to enable the information of a calling-side terminal apparatus to be automatically updated, and has industrial applicability.

## Claims

1. An information updating system comprising:
a calling-side terminal apparatus that transmits updated information and address information of a mobile terminal apparatus; and
a receiving-side terminal apparatus having a search section that searches an address book for information of the calling-side terminal apparatus based on the address information, and an updating section that updates the searched information of the calling-side terminal apparatus based on the updated information.

2. An information updating system comprising:
a calling-side terminal apparatus that transmits updated information of mobile terminal information;
a server apparatus having a managing section that manages address information of mobile terminal apparatuses, an extracting section that extracts transmission destinations having the address information of the calling-side terminal apparatus, and a communication section that distributes the updated information transmitted from the calling-side terminal apparatus to the extracted transmission destinations; and
a receiving-side terminal apparatus having an updating section that updates information of the calling-side terminal apparatus based on the updated information.

3. The information updating system according to claim 1, further comprising:
a calling-side exchange having a determining section that determines whether or not the receiving-side terminal apparatus is a registered user of a company of the exchange from the address information, and a communication section that transmits the updated information and the address information when the receiving-side terminal apparatus is a registered user of the company; and
a receiving-side exchange having a determining section that determines whether or not the receiving-side terminal apparatus supports the system from the address information, and a communication section that transmits the updated information and the address information to the receiving-side terminal apparatus when the receiving-side terminal apparatus supports the system.

4. The information updating system according to claim 3, wherein in the receiving-side exchange, when it is determined that the receiving-side terminal apparatus does not support the system, information of a site where the updated information is stored is transmitted to the receiving-side terminal apparatus.

5. The information updating system according to claim 3, wherein in the calling-side exchange, when it is determined that the receiving-side terminal apparatus is not a registered user of the company, information of a site where the updated information is stored is transmitted to the receiving-side terminal apparatus.

6. An information updating method comprising:
transmitting updated information and address information of a mobile terminal apparatus from a calling-side terminal apparatus to a receiving-side terminal apparatus;
searching, in the receiving-side terminal apparatus, an address book for information of the calling-side terminal apparatus based on the address information; and
updating, in the receiving-side terminal apparatus, the searched information of the calling-side terminal apparatus based on the updated information.

7. An information updating method comprising:
transmitting updated information of mobile terminal information from a calling-side terminal apparatus to a server apparatus;
extracting, in the server apparatus, receiving-side terminal apparatuses having the address information of the calling-side terminal apparatus from management information of mobile terminal apparatuses;
distributing, in the server apparatus, the updated information to the extracted receiving-side terminal apparatuses; and
updating, in the receiving-side terminal apparatuses, information of the calling-side terminal apparatus based on the updated information.

8. The information updating method according to claim 6, further comprising:
determining, in a calling-side exchange, whether or not the receiving-side terminal apparatus is a registered user of a company of the exchange from the address information;
transmitting, in the calling-side exchange, the updated information and the address information when the receiving-side terminal apparatus is a registered user of the company;
determining, in a receiving-side exchange, whether or not the receiving-side terminal apparatus supports the system from the address information; and
transmitting, in the receiving-side exchange, the updated information and the address information to the receiving-side terminal apparatus when the receiving-side terminal apparatus supports the system.

9. The information updating method according to claim 8, wherein in the receiving-side exchange, when it is determined that the receiving-side terminal apparatus does not support the system, information of a site where the updated information is stored is transmitted to the receiving-side terminal apparatus.

10. The information updating method according to claim 8, wherein in the calling-side exchange, when it is determined that the receiving-side terminal apparatus is not a registered user of the company, information of a site where the updated information is stored is transmitted to the receiving-side terminal apparatus.
